# EUROPEAN PATENT APPLICATION

(11) **EP 2 573 149 A1**
(43) Date of publication of application: **27.03.2013**
(21) Application number: 11182784.6
(22) Date of filing: 26.09.2011
(51) Int. Cl.: C09J 7/00, C09J 7/02, C09J 133/06

(54) **Multilayer pressure-sensitive adhesive films with a (meth)acrylic-based elastomeric material**

(71) Applicant: 3M Innovative Properties Company, Saint Paul, MN 55133-3427 (US)
(72) Inventor: Traser, Steffen, 41453 Neuss (DE); Forster, Jan Daniel, 41453 Neuss (DE); Strerath, Christiane, 41453 Neuss (DE); Seth, Jayshree, St. Paul, MN Minnesota 55133-3427 (US); Weikel, Arlin Lee, St. Paul, MN Minnesota 55133-3427 (US); Kavanagh, Maureen Ann, St. Paul, MN Minnesota 55133-3427 (US); Clapper, Jason D., St. Paul, MN 55144 (US); Lewandowski, Kevin M., St. Paul, MN 55144 (US); Chen, Zhong Z., St. Paul, MN 55144 (US)
(74) Representative: Gabriel, Kiroubagaranne

(57) **Abstract**

The present invention is directed to a multilayer pressure sensitive adhesive (PSA) film, having a first pressure sensitive adhesive layer and at least an opposing layer, wherein the first pressure sensitive adhesive layer comprises a pressure-sensitive adhesive composition with a (meth)acrylic-based elastomeric material comprising a reaction product of polymerizable material comprising:
(a) a first monomer which is an alkyl (meth)acrylate ester of a primary alcohol R¹-OH, the alkyl (meth)acrylate ester being of Formula (I)

CH₂=C(R²)-(CO)-OR¹ (I)

wherein
R¹ is an alkyl having 14 to 25 carbon atoms and the primary alcohol R¹-OH has an iso number equal to at least 2 but no greater than 4,
R² is hydrogen or methyl; and
(b) a second monomer having an ethylenically unsaturated group. The invention is also directed to a method for the manufacturing of such a multilayer PSA film and its use.

## Description

### Technical Field of the Invention

The present invention relates to a multilayer pressure sensitive adhesive (PSA) film, having a first pressure sensitive adhesive layer and at least one opposing layer. This invention provides also a method for production of such a multilayer PSA film.

### Background of the Invention

Pressure-sensitive adhesives are adhesives with specific characteristics such as aggressive and permanent tack, adherence with no more than finger pressure, sufficient ability to hold onto an adherend, and sufficient cohesive strength to be removed cleanly from the adherend. As applications for pressure-sensitive adhesives have increased substantially in recent years, performance requirements have become more demanding.

While a variety of natural and synthetic elastomeric materials have been included in pressure-sensitive adhesives, the use of (meth)acrylic-based elastomeric material is widespread due to a number of beneficial properties. In addition to providing the desired degree of adhesion and cohesion, (meth)acrylic-based elastomeric materials often can be tailored to provide other desirable characteristics such as elasticity, tackiness, transparency, resistance to light and oxidation, and the like.

(Meth)acrylic-based elastomeric materials have been described, for example, in the following patent references: EP Patent Application 2072594 A1 (Kondou et al.), US Patent 5,648,425 (Everaerts et al.), US Patent 6,777,079 B2 (Zhou et al.), and US Patent Application 2011/04486 A1 (Ma et al.).

From US 4,818,610 (Zimmerman et al.) a pressure-sensitive adhesive tape comprising a plurality of superimposed layers is known, wherein at least one outer layer is a pressure-sensitive adhesive layer. The pressure-sensitive adhesive layer can be obtained from a polymerizable mixture containing acrylates.

Without contesting the technical advantages associated with the pressure sensitive adhesive films known in the art, there is still a need for multilayer PSA films having improved adhesion characteristics, in particular with respect to peel forces and shear resistance.

### Summary of the Invention

The pressure sensitive materials known from the prior art do often not provide sufficient tack on so-called LSE substrates, i.e. substrates having a low surface energy like a polyolefin surface or a clear coat surface, in particular a clear coat for vehicles like a car. Especially, the peel force resistance on these difficult-to-bond substrates do often not fulfill the requirements, in particular under environmental stress like altering temperatures and humidity. This deficit may in part be overcome by the addition of higher amounts of tackifiers. However, the excessive use of tackifiers comes often with the drawback that the shear resistance is lowered due to the plasticizing effect of tackifiers. Also, tackifiers may migrate into the substrate to which the adhesive tape is bonded and may lead to an undesired colour change or reduction of stability.

Another problem of tackified pressure-sensitive adhesives containing conventional (meth)acrylic-based elastomeric materials is that these formulations may appear cloudy, demonstrating a loss in the characteristic transparency of the conventional (meth)acrylic-based elastomeric materials. The cloudiness is an indication of limited or incomplete compatibility of the tackifier and the elastomeric material. The reduced compatibility can lead to a degradation of adhesive properties, as evidenced by a loss of tack or reduced peel adhesion on aging.

Hence it is an object of this invention to provide a multilayer PSA film of the above-mentioned type which combines good peel forces on LSE (low surface energy) substrates and a high shear resistance without the necessity of excessive tackifier use. This objective is solved by a multilayer pressure sensitive adhesive (PSA) film according to the present invention.

According to one aspect, the present invention relates to a multilayer pressure sensitive adhesive (PSA) film, having a first pressure sensitive adhesive layer and at least one opposing layer, wherein the first pressure sensitive adhesive layer comprises a pressure-sensitive adhesive composition with a (meth)acrylic-based elastomeric material comprising a reaction product of polymerizable material comprising:
(a) a first monomer that is an alkyl (meth)acrylate ester of a primary alcohol R¹-OH, the alkyl (meth)acrylate ester being of Formula (I)

   CH₂=C(R²)-(CO)-OR¹ (I)

   wherein
   R¹ is an alkyl having 14 to 25 carbon atoms and the primary alcohol R¹-OH has an iso number equal to at least 2 but no greater than 4,
   R² is hydrogen or methyl; and
(b) a second monomer having an ethylenically unsaturated group.

It has indeed surprisingly been found that multilayer PSA films comprising a pressure sensitive adhesive layer with a pressure-sensitive adhesive composition of the before mentioned kind combine high peel forces on LSE substrates with high shear force resistance.

The multilayer PSA films of this invention are therefore particularly suitable to be bonded to low energy surfaces such as polyolefin surfaces and clear coat surfaces. The multilayer PSA films of the invention are preferably suitable to be bonded on clear coat surfaces of a vehicle, such as a car.

In another aspect, the present invention is directed to a method for manufacturing a multilayer pressure sensitive adhesive film as above-described, whereby the first pressure sensitive adhesive layer and the opposing layer are superimposed on one another.

In still another aspect, the present invention relates to the use of a multilayer pressure sensitive adhesive film as above-described as a PSA film to be bonded with its first pressure sensitive adhesive layer to a LSE substrate surface, preferably to a clear coat surface.

### Detailed description of the invention

According to the present invention, the pressure-sensitive adhesives for use in the multilayer PSA film comprise a (meth)acrylic-based elastomeric material prepared using polymerizable material that includes (a) an alkyl (meth)acrylate having an alkyl group that is branched and that contains at least 14 carbon atoms and (b) at least one other ethylenically unsaturated monomer.

As used herein, the term "alkyl (meth)acrylate" and "alkyl (meth)acrylate ester" are used interchangeably. The term "(meth)acrylate" refers to an acrylate, methacrylate, or both. The term "(meth)acrylic" refers to methacrylic, acrylic, or both. A (meth)acrylic-based" material refers to one prepared from one or more monomers having a (meth)acryloyl group, which is a group of formula CH₂=C(R²)-(CO)- where R² is hydrogen or methyl.

(Meth)acrylic-based elastomeric materials included in known pressure-sensitive adhesives are often prepared from one or more non-polar acrylate monomers with a relatively low glass transition temperature (Tg) (i.e., the Tg of a monomer is measured as a homopolymer prepared from the monomer) plus various optional monomers such as one or more polar monomers. The polar monomers are often selected to have an acidic group, a hydroxyl group, or a nitrogen-containing group.

Some widely used non-polar acrylate monomers in conventional (meth)acrylic-based elastomeric materials are alkyl (meth)acrylates such as 2-ethylhexyl acrylate (EHA) and isooctyl acrylate (IOA). Both of these alkyl acrylates have an alkyl group with eight carbon atoms (i.e., the monomers are C₈ alkyl acrylates). Alkyl (meth)acrylates having alkyl groups with more than eight carbon atoms or less than eight carbon atoms can have a number of disadvantages in terms of pressure-sensitive adhesive performance. For example, alkyl (meth)acrylates with shorter alkyl chains (e.g., butyl acrylate, which is a C₄ alkyl acrylate), tend to significantly increase both the Tg and storage modulus of the elastomeric material. The room temperature storage modulus can increase above the useful range for a pressure-sensitive adhesive (e.g., about 3 x 10⁶ dynes/cm²). That is, the resulting elastomeric material may have insufficient tackiness to be considered a pressure-sensitive adhesive. Alternatively, alkyl (meth)acrylates with longer alkyl chains such as longer linear alkyl chains (e.g., n-octadecyl acrylate, which is a C₁₈ alkyl acrylate), can lead to crystalline groups within the polymer. The presence of these crystalline groups can significantly reduce the tackiness of the elastomeric material.

If the crystallization temperature (Tc) can be suppressed, alkyl (meth)acrylates having alkyl groups with a greater number of carbon atoms can be beneficial over conventional C₈ alkyl (meth)acrylates. Elastomeric materials are provided that are formed using an alkyl (meth)acrylate with an alkyl group that is branched and that contains at least 14 carbon atoms. These (meth)acrylic-based elastomeric materials can have a lower Tg, a lower plateau storage modulus, improved solubility (i.e., miscibility or compatibility) with hydrogenated tackifiers of low polarity, and improved adhesive strength (i.e., peel strength) on low surface energy substrates compared to elastomeric materials prepared using conventional C₈ alkyl (meth)acrylates.

As set out above, the pressure-sensitive adhesive composition for use in the multilayer PSA film according to the invention includes a (meth)acrylic-based elastomeric material. The elastomeric material is a polymerized reaction product of polymerizable material that includes (a) a first monomer that is an alkyl (meth)acrylate ester of a primary alcohol R¹-OH and (b) a second monomer having an ethylenically unsaturated group. The alkyl (meth)acrylate ester used as the first monomer is of Formula (I)

CH₂=C(R²)-(CO)-OR¹ (I)

where group R¹ is an alkyl group having 14 to 25 carbon atoms and the primary alcohol R¹-OH has an iso index in a range of 2 to 4. Group R² is hydrogen or methyl. In many embodiments, R² is hydrogen (i.e., the monomer of Formula (I) is an alkyl acrylate ester).

In Formula (I), the group R¹ is a branched alkyl group having 14 to 25 carbon atoms. The primary alcohol R¹-OH used to form the alkyl (meth)acrylate ester is often prepared using the oxo process. The oxo process is based on the hydroformylation of olefins made through the oligomerization of ethylene, propylene, butylene, or the like. Alcohols prepared using this process are typically branched primary alcohols with multiple branching locations. At each carbon atom branching point in group R¹, there is an attached ethyl or methyl group. In other words, where a first chain is branched into two second chains, at least one of the second chains is methyl or ethyl. One of the second chains is further branched into two third chains and at least one of the third chains is methyl or ethyl. Likewise, if any third chain is further branched into two fourth chains, at least one of the fourth chains is methyl or ethyl. In some embodiments, a majority (e.g., at least 50 percent, at least 60 percent, at least 70 percent, at least 80 percent, or at least 90 percent) of carbon atom branching points have an attached ethyl group.

Suitable oxo alcohols (i.e., alcohols prepared using the oxo process) are commercially available or can be prepared using the methods, for example, described in PCT Application Publication WO 2009/124979 A1 (Rudolph et al.). These oxo alcohols can be converted to alkyl (meth)acrylates by reaction with (meth)acrylic acid using methods such as those described, for example, in US Patent Application Publication 2011/0130582 (Bette et al.). Some alkyl (meth)acrylate esters prepared from oxo alcohols such as alkyl (meth)acrylate esters with a C₁₇ alkyl group are commercially available from BASF (Ludwigshafen, DE). These C₁₇ alkyl (meth)acrylates are often a mixture of structural isomers.

The degree of branching (i.e., iso index) is defined as the number of methyl (-CH₃) groups in the primary alcohol R¹-OH minus 1. The average (mean) degree of branching is the average of all of the different degrees of branching for all of the primary alcohols R¹-OH present in a sample. The average degree of branching can be determined using ¹H Nuclear Magnetic Resonance spectroscopic analysis of the alcohol or alcohol mixture. More specifically, each alcohol in the sample is reacted with trichloroacetyl isocyanate to form a carbamic ester. The average degree of branching is calculated using Equation 1.

Iso index = ((I(CH₃)/3)/(I(CH₂-OR)/2))-1 (1)

In Equation 1, the term I(CH₃) refers to the total integration peak area corresponding to the methyl protons (δ is in the range of 0.70 to 0.95 ppm) and the term I(CH₂-OR) refers to the total integration peak area of the methylene protons (δ is 3.9 to 4.5) in the derivatized primary alcohol. The term R refers to the remainder of the carbamic ester minus the -OR¹ group.

The iso index is usually in the range of 2 to 4. In some embodiments, the iso number is at least 2.2, at least 2.4, at least 2.6. at least 2.8, or at least 3. The iso index can be up to 3.8, up to 3.6, up to 3.4, up to 3.2, or up to 3. For example, the iso index can be in the range of 2.2 to 4, 2.2 to 3.8, 2.4 to 4, 2.4 to 3.8, 2.6 to 4, 2.6 to 3.8, 2.8 to 4, 2.8 to 3.8, 2.8 to 3.6, or 2.8 to 3.4.

A plurality of first monomers can be used in the formation of the (meth)acrylic-based elastomeric material. Stated differently, the first monomer can be a mixture of alkyl (meth)acrylate esters with different alkyl groups. The alkyl groups (i.e., group R¹ in Formula (I)) can vary in the number of carbon atoms, can be structural isomers, or both. Each alkyl group has 14 to 25 carbon atoms. For example, the number of carbon atoms can be in the range of 17 to 25, 17 to 21, 14 to 21, or 14 to 17.

In some embodiments, the plurality of first monomers of Formula (I) can be prepared from a plurality of the primary alcohols R¹-OH that are structural isomers. In some embodiments, at least 50 weight percent, at least 60 weight percent, at least 70 weight percent, at least 80 weight percent, at least 90 weight percent, at least 95 weight percent, at least 97 weight percent, at least 98 weight percent, at least 99 weight percent, or at least 99.5 weight percent of the primary alcohols are structural isomers. In some embodiments, the structural isomers have a group R¹ with 17 carbon atoms, 21 carbon atoms, or 25 carbon atoms.

Any suitable amount of each structural isomer can be present. In some embodiments of structural isomers, the plurality of different monomers of Formula (I) can be predominately a single monomer. For example, at least 50 weight percent, at least 60 weight percent, at least 70 weight percent, at least 90 weight percent, at least 95 weight percent, or at least 98 percent of the first monomers can be a particular structural isomer.

In other embodiments, the plurality of first monomers can be prepared from a plurality of primary alcohols R¹-OH with alkyl groups varying in the number of carbon atoms. More specifically, the alkyl groups have 14 to 25 carbon atoms. For example, the different alkyl groups can have 17 to 25, 17 to 21, 14 to 21, or 14 to 17 carbon atoms. Any amount of each first monomer can be present. In some embodiments, the plurality of different monomers of Formula (I) can be predominately a single monomer. For example, at least 50 weight percent, at least 60 weight percent, at least 70 weight percent, at least 90 weight percent, at least 95 weight percent, or at least 98 percent of the first monomers can be a particular monomer.

A polymeric material prepared using the first monomer of Formula (I) as the only polymerizable material (e.g., a homopolymer formed from the first monomer) tends to have a low crystallization temperature (Tc). The crystallization temperature is often less than -80°C, less than -85°C, less than -90°C, or less than -95°C. The presence of the multiple branching points in the alkyl group R¹ is believed to contribute to this low crystallization temperature. Conventional alkyl (meth)acrylate monomers with linear rather than branched, long chain alkyl groups often have a much greater Tc. For example, lauryl acrylate with a linear C₁₂ alkyl group has a Tc of -8°C when measured using Differential Scanning Calorimetric (DSC) analysis. A lower Tc is typically desirable for pressure-sensitive adhesives.

A polymeric material prepared by polymerizing only the first monomer of Formula (I) (e.g., a homopolymer formed from the first monomer) tends to have a glass transition temperature less than -40°C. For example, the Tg is less than -45°C, less than -50°C, less than -55°C, less than -60°C, or less than -65°C. The low Tg is advantageous for preparation of elastomeric materials useable over a wide temperature range. The low Tg may also facilitate conformity to substrates and increased adhesion to a wider assortment of substrate materials.

The number of carbon atoms and the degree of branching in the alkyl group R¹ can be varied to optimize the rheological properties of the elastomeric material. For example, as the number of carbon atoms is increased, some degree of branching (i.e., a larger iso index) is needed to maintain a low Tc. However, if the iso index is too high, the Tg and the storage modulus of the elastomeric material will increase. If the Tg and the storage modulus increase too much, the pressure-sensitive adhesive characteristics may be compromised.

Monomers of Formula (I) advantageously have a higher boiling point than conventionally used alkyl acrylate monomers with a C₈ alkyl group. A higher boiling point may result in the formation of a pressure-sensitive adhesive with a lower overall volatile content and odor compared to conventional (meth)acrylic-based pressure-sensitive adhesives.

Any suitable amount of the first monomer can be used to form the copolymeric (meth)acrylic-based elastomeric material. In some embodiments, at least 50 weight percent of the polymerizable material used to form the elastomeric material is a first monomer of Formula (I). For example, at least 60 weight percent, at least 65 weight percent, at least 70 weight percent, at least 75 weight percent, at least 80 weight percent, at least 85 weight percent, at least 90 weight percent, or at least 95 weight percent of the polymerizable material used to form the elastomeric material can be of Formula (I). In some embodiments, the first monomer of Formula (I) is present in an amount in a range of 50 to 99.5 weight percent, 50 to 99 weight percent, 60 to 99 weight percent, 60 to 95 weight percent, 70 to 99 weight percent, 70 to 95 weight percent, 80 to 99 weight percent, or 85 to 99 weight percent based on the total weight of polymerizable material used to form the elastomeric material.

The amount of the alkyl (meth)acrylate monomer of Formula (I) that can be added is typically greater than for other previously used alkyl (meth)acrylates having an alkyl group with at least 10 carbon atoms. When conventional alkyl (meth)acrylates having an alkyl group with at least 10 carbon atoms are used, crystallization of the polymeric material is induced. To prevent crystallization, the amount of these alkyl (meth)acrylates is typically in the range of less than 30 weight percent of the polymerizable material (e.g., in the range of 5 to 30 weight percent of the polymerizable material).

The (meth)acrylic-based elastomeric material included in the pressure-sensitive adhesive composition for the inventive multilayer PSA film is a copolymer prepared from (a) the first monomer of Formula (I) and (b) a second monomer having an ethylenically unsaturated group. Any suitable second monomer with an ethylenically unsaturated group can be used in combination with the first monomer of Formula (I) to prepare the (meth)acrylic-based elastomeric material. Suitable second monomers include, but are not limited to, non-polar (meth)acrylate esters that are not of Formula (I), various other non-polar monomers such as various non-polar vinyl monomers without a (meth)acryloyl group, various polar monomers, crosslinkers, or a combination thereof. With the exception of crosslinkers, the second monomer typically has a single ethylenically unsaturated group.

The non-polar (meth)acrylate esters that are not of Formula (I) include, for example, alkyl (meth)acrylates with an alkyl group having 1 to 13 carbon atoms, alkyl (meth)acrylates with an alkyl group having at least 14 carbon atoms but with a iso number less than 2 (e.g., alkyl groups that are linear or that have a single branching point), alkenyl (meth)acrylates, aryl (meth)acrylates, aryl substituted alkyl acrylate, aryloxy substituted alkyl (meth)acrylates, and the like.

Alkyl (meth)acrylates with an alkyl group having 1 to 13 carbon atoms include, but are not limited to, methyl (meth)acrylate, ethyl (meth)acrylate, n-propyl (meth)acrylate, isopropyl (meth)acrylate, n-butyl (meth)acrylate, isobutyl (meth)acrylate, n-pentyl (meth)acrylate, iso-pentyl (meth)acrylate (i.e., iso-amyl (meth)acrylate), 3-pentyl (meth)acrylate, 2-methyl-1-butyl (meth)acrylate, 3-methyl-1-butyl (meth)acrylate, n-hexyl (meth)acrylate, iso-hexyl (meth)acrylate, 2-methyl-1-pentyl (meth)acrylate, 3-methyl-1-pentyl (meth)acrylate, 4-methyl-2-pentyl (meth)acrylate, 2-ethyl-1-butyl (meth)acrylate, 2-methy-1-hexyl (meth)acrylate, 3,5,5-trimethyl-1-hexyl (meth)acrylate, cyclohexyl (meth)acrylate, 3-heptyl (meth)acrylate, n-octyl (meth)acrylate, iso-octyl (meth)acrylate, 2-octyl (meth)acrylate, 2-ethyl-1-hexyl (meth)acrylate, n-decyl (meth)acrylate, iso-decyl (meth)acrylate, 2-propylheptyl (meth)acrylate, isononyl (meth)acrylate, n-dodecyl (meth)acrylate (i.e., lauryl (meth)acrylate), n-tridecyl (meth)acrylate, iso-tridecyl (meth)acrylate, 3,7-dimethyl-octyl (meth)acrylate, and the like.

Other suitable alkyl (meth)acrylate esters not of Formula (I) include those with an alkyl group having at least 14 carbon atoms but that are linear or that have a single branching point. Examples include, but are not limited to, 1-octadecyl (meth)acrylate, 17-methyl-1-heptadecyl (meth)acrylate, and 1-tetradecyl (meth)acrylate.

Still other suitable non-polar (meth)acrylate esters are aryl (meth)acrylates such as, for example, phenyl (meth)acrylate or benzyl (meth)acrylate; alkenyl (meth)acrylates such as, for example, 3,7-dimethyl-6-octenyl-1 (meth)acrylate and allyl (meth)acrylate; and aryl substituted alkyl (meth)acrylates or aryloxy substituted alkyl (meth)acrylates such as, for example, 2-biphenylhexyl (meth)acrylate, benzyl (meth)acrylate, and 2-phenoxy ethyl (meth)acrylate.

In some embodiments, it is desirable for the second monomer to have a relatively high Tg when formed into a homopolymer (i.e., a polymer prepared using a single polymerizable material). These monomers are added to modulate the Tg of the elastomeric material to provide enhanced adhesive strength. When polymerized by itself, these second monomers often have a Tg equal to at least 25°C, at least 30°C, at least 40°C, or at least 50°C. Suitable high Tg monomers include, but are not limited to, methyl methacrylate, tert-butyl methacrylate, ethyl methacrylate, n-propyl methacrylate, isopropyl methacrylate, iso-butyl methacrylate, tert-butyl methacrylate, stearyl methacrylate, phenyl methacrylate, cyclohexyl methacrylate, isobornyl (meth)acrylate, benzyl methacrylate, 3,3,5-trimethylcyclohexyl acrylate, cyclohexyl methacrylate, or combinations thereof.

If present, any of the non-polar (meth)acrylate esters that are not of Formula (I) can be present in any suitable amount. Such monomers can be present in amounts up to 50 weight percent based on a total weight of polymerizable material used to form the (meth)acrylic-based elastomeric material. The amount can be up to 45 weight percent, up to 40 weight percent, up to 30 weight percent, up to 20 weight percent, or up to 10 weight percent. For example, this monomer can be present in an amount in a range of 0 to 50 weight percent, 1 to 50 weight percent, 0 to 40 weight percent, 1 to 40 weight percent, 0 to 30 weight percent, 1 to 30 weight percent, 5 to 30 weight percent, 10 to 30 weight percent, 0 to 20 weight percent, 1 to 20 weight percent, 5 to 20 weight percent, 10 to 20 weight percent, 0 to 10 weight percent, 1 to 10 percent, or 5 to 10 weight percent.

The second monomer can include a monomer with an acidic group and a single ethylenically unsaturated group (i.e., an acidic monomer). These monomers are typically polar or strongly polar. Polarity (i. e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269 - 280. The ethylenically unsaturated group can be a (meth)acryloyl group or a vinyl group (i.e., CH2=CH2- group) that is not a (meth)acryloyl group. Exemplary acidic monomers can have a carboxylic acid group, sulfonic acid group, phosphonic acid group, or salts thereof. Due to their availability, acidic monomers with carboxylic acid groups or salts thereof are often selected. If stronger acidic groups are desired, monomers with phosphonic acid, sulfonic acid groups, or salts thereof can be used. Examples of acidic monomers include, but are not limited to, (meth)acrylic acid, itaconic acid, fumaric acid, crotonic acid, citraconic acid, maleic acid, oleic acid, beta-carboxyethyl (meth)acrylate, 2-sulfoethyl methacrylate, styrene sulfonic acid, 2-acrylamido-2-methylpropanesulfonic acid, vinylphosphonic acid, or mixtures thereof. Any suitable salt of an acidic group can be used. In many embodiments, the cation of the salt is an ion of an alkaline metal (e.g., sodium, potassium, or lithium ion), an ion of an alkaline earth (e.g., calcium, magnesium, or strontium ion), an ammonium ion, or an ammonium ion substituted with one or more alkyl or aryl groups.

For differentiation of polarity, some examples will be given. In particular useful representatives of strongly polar monomers are acrylic acid, methacrylic acid, itaconic acid, hydroxyalkyl acrylates, acrylamides and substituted acrylamides while, for example N-vinyl pyrrolidone, N-vinyl caprolactam, acrylonitrile, vinylchloride, diallyl phthalate and N,N-dialkylamino (meth)acrylates are typical examples of moderately polar monomers. Further examples for polar monomers include cyano acrylate, fumaric acid, crotonic acid, citronic acid, maleic acid, β-carboxyethyl acrylate or sulfoethyl methacrylate. The alkyl (meth)acrylate monomers enumerated above are typical examples of relatively poorly polar monomers. These examples are given for illustrative reasons only and are not to be understood as limiting.

For the multilayer PSA films according to the present invention, it is preferred that the content of strongly polar acrylates is limited in order to provide good adhesion to LSE (Low Surface Energy) surfaces. Hence, it is advantageous that the polymerizable material for the pressure sensitive adhesive layer(s) of the inventive PSA film comprises up to 10 weight percent of the strongly polar acrylate based on a total weight of polymerizable material, in particular from 1 to 8 weight percent, preferably 2 to 6 weight percent.

In the context of the present invention, the expression "low surface energy substrates" is meant to refer to those substrates having a surface energy of less than 45 dynes per centimeter, more typically less than 40 dynes per centimeter, and most typically less than 35 dynes per centimeter. The surface energy is typically determined from contact angle measurements as described, for example, in ASTM D7490-08. Included among such materials are polypropylene, polyethylene (e.g., high density polyethylene or HDPE), polystyrene and poly(methyl methacrylate) (PMMA). Other substrates may also have properties of low surface energy due to a residue, such as an oil residue or a film, such as paint, being on the surface of the substrate.

Acrylic PSAs are typically derived from petroleum feedstocks. The increase in the price of oil, and concomitant petroleum-derived products, has led to volatile prices and supply for many adhesive products. It is therefore highly desirable to replace all or part of the petroleum-based feedstocks with those derived from renewable sources, such as plants, as such materials are relatively cheaper, and are therefore both economically and socially beneficial. Therefore, the need for such plant-derived materials has become increasingly significant.

In a preferred execution, the present invention provides a composition for the (at least one) opposing layer of the multilayer PSA film of the invention which is derived from renewable resources. In particular, the present invention provides a composition of the opposing layer of the multilayer PSA film derived, at least partly, from plant materials. This includes executions, in which not only one of the layers but several or all of the layers of the multilayer PSA film are derived from renewable resources. In such a further preferred execution, the multilayer PSA film according to the invention is characterized in that that the polymerizable precursor of the polymer base material for forming the corresponding layers comprises 2-octyl(meth)acrylate, wherein the polymerizable precursor comprises preferably from 85 to 99.5 wt.-% 2-octyl(meth)acrylate, more preferably from 90 to 99.5 wt.-% (based on the total weight of the polymerizable mixture used to form the corresponding layers). According to a still more preferred execution of the multilayer PSA film of the invention, the polymerizable precursor of the polymer base material for forming the opposing layer, comprises 2-octyl(meth)acrylate, wherein said polymerizable precursor preferably comprises from 85 to 99.5 wt%, more preferably from 90 to 99.5 wt% of 2-octyl(meth)acrylate (based on the total weight of polymerizable mixture used to form the opposing layer).

Acrylic based compositions comprising 2-octyl(meth)acrylate are described in detail in US-B2-7,385,020 the content of which is herewith incorporated by reference.

The preferred composition of the opposing layer derived from 2-octyl (meth)acrylate provides comparable properties when compared with other isomers of octyl (meth)acrylate, such as n-octyl and isoctyl. Further, the present composition of the opposing layer has lower viscosities than adhesives derived from other octyl isomers, such as isoctyl acrylate. The lower viscosity composition is advantageously easier to coat.

The 2-octyl (meth)acrylate may be prepared by conventional techniques from 2-octanol and (meth)acryloyl derivates such as esters, acids and acyl halides. The 2-octanol may be prepared by treatment of ricinoleic acid, derived from castor oil, (or ester or acyl halide thereof) with sodium hydroxide, followed by distillation from the co-product sebacic acid.

However, the use of a chain transfer agent is generally not necessary. Applicants have discovered that the instant 2-octyl (meth)acrylate compositions have generally lower inherent and solution viscosities when compared to isomeric octyl (meth)acrylates, at the same concentrations, and under the same polymerization conditions. While not wishing to be bound by theory, it is believed that the instant octyl (meth)acrylates, having a tertiary hydrogen atom alpha to the ester hydroxyloxygen atom, serve as "internal" chain transfer agents to control the molecular weight.

It is further preferred that the opposing layer is at least in part derived from biological material, in particular from a plant material, whereas especially at least 25 wt.-% of the monomers are derived from biological material, preferably at least 40 wt.-%. This is advantageous in order to provide multilayer PSA films which come at least partially from "green" sources, which is ecologically more sustainable and also reduces the dependency on mineral oil and its price development. Under the term "derived from biological material" it is meant that from a certain chemical ingredient, at least a part of its chemical structure comes from biological materials, in particular at least 50 wt.-% of its structure. This definition is in principle the same as for bio-diesel fuel, in which usually only the fatty acid part comes from biological sources whereas the methanol may also be derived from fossil material like coal or mineral oil.

According to the preferred aspect of the invention whereby the multilayer PSA film comprises 2-octyl(meth)acrylate, it is particularly preferred that the 2-octyl(meth)acrylate is completely (i.e. 100 wt.-%) derived from biological material.

Other suitable second monomers which are not necessarily derived from biological sources are those with a single ethylenically unsaturated group and a hydroxyl group. These monomers tend to be polar. The ethylenically unsaturated group can be a (meth)acryloyl group or a vinyl group (i.e., CH₂=CH₂- group) that is not a (meth)acryloyl group. Exemplary monomers with a hydroxyl group include, but are not limited to, hydroxyalkyl (meth)acrylates (e.g., 2-hydroxyethyl acrylate or 3-hydroxypropyl acrylate), hydroxyalkyl (meth)acrylamides (e.g., 2-hydroxyethyl acrylamide or 3-hydroxypropyl acrylamide), and ethoxylated hydroxyethyl methacrylate (e.g., monomers commercially available from Sartomer under the trade designation CD570, CD571, CD572).

Still other suitable polar second monomers are those with a single ethylenically unsaturated group and a nitrogen-containing group or a salt thereof. Most of these monomers tend to be polar. The ethylenically unsaturated group can be a (meth)acryloyl group or a vinyl group (i.e., CH₂=CH₂- group) that is not a (meth)acryloyl group. Examples of the nitrogen-containing groups include, but at not limited to, secondary amido groups and tertiary amido groups. Exemplary polar monomers with secondary amido groups include, but are not limited to, N-alkyl (meth)acrylamides such as N-methyl acrylamide, N-ethyl acrylamide, N-isopropyl acrylamide, tert-octyl acrylamide, or N-octyl acrylamide. Exemplary polar monomers with a tertiary amido group include, but are not limited to, N-vinyl caprolactam, N-vinyl-2-pyrrolidone, acryloyl morpholine, and N,N-dialkyl acrylamides such as N,N-dimethyl acrylamide, N,N-diethyl acrylamide, N,N-dipropyl acrylamide, and N,N-dibutyl acrylamide.

Still other suitable polar second monomers include a single ethylenically unsaturated group and an ether group (i.e., a group containing at least one alkylene-oxyalkylene group of formula -R-O-R- where each R is an alkylene having 1 to 4 carbon atoms). These monomers tend to be polar. Exemplary monomers include, but are not limited to, alkoxylated alkyl (meth)acrylates such as ethoxyethoxyethyl acrylate, 2-methoxyethyl acrylate, and 2-ethoxyethyl acrylate; and a poly(alkylene oxide) acrylates such as poly(ethylene oxide) acrylates, and poly(propylene oxide) acrylates. The poly(alkylene oxide) acrylates are often referred to as poly(alkylene glycol) acrylates. These monomers can have any suitable end group such as a hydroxyl group or an alkoxy group. For example, when the end group is a methoxy group, the monomer can be referred to as methoxy poly(ethylene glycol) acrylate.

The various polar monomers can be added to increase adhesion of the pressure-sensitive adhesive of the pressure sensitive adhesive layer(s) of the inventive PSA film to an adjacent layer such as a substrate or a backing layer, to enhance the cohesive strength of the (meth)acrylic-based elastomeric material, or both. Any of the polar monomers or salt thereof can be present in any suitable amounts. In some embodiments, the polar monomers are present in amounts up to 15 weight percent based on a total weight of polymerizable material used to form the (meth)acrylic-based elastomeric material. This amount is often up to 10 weight percent or up to 5 weight percent. For example, the polar monomer can be present in an amount in a range of 0 to 15 weight percent, 0.5 to 15 weight percent, 1 to 15 weight percent, 0 to 10 weight percent, 0.5 to 10 weight percent, 1 to 10 weight percent, 0 to 5 weight percent, 0.5 to 5 weight percent, or 1 to 5 weight percent.

The composition used to form the pressure-sensitive adhesive polymer for the multilayer PSA film according to the invention may further include one or more other vinyl monomers such as vinyl esters (e.g., vinyl acetate and vinyl propionate); styrene or derivatives thereof such as alkyl substituted styrene (e.g., α-methyl styrene); vinyl halide; or mixtures thereof. These monomers can be polar or non-polar. If present, these other vinyl monomer can be present in any suitable amount. In some embodiments, the vinyl monomers are present in an amount of up 5 parts by weight, based on a total weight of polymerizable material used to form the (meth)acrylic-based elastomeric material. For example, the vinyl monomer can be used in amounts up to 4 weight percent, up to 3 weight percent, or up to 2 weight percent. In some embodiments, the vinyl monomer is present in an amount in a range of 0 to 5 weight percent, 0.5 to 5 weight percent, 1 to 5 weight percent, 0 to 3 weight percent, or 1 to 3 weight percent.

A crosslinker can be used as a second monomer. The crosslinker often increases the cohesive strength and the tensile strength of the (meth)acrylic-based elastomeric material. The crosslinker can have at least two functional groups that are capable of polymerizing with the first monomer on another second monomer. That is, the crosslinker can have at least two ethylenically unsaturated groups. Suitable crosslinkers often have multiple (meth)acryloyl groups. Alternatively, the crosslinker can have at least two groups that are capable of reacting with various functional groups (i.e., functional groups that are not ethylenically unsaturated groups) on another second monomer. For example, the crosslinker can have multiple groups that can react with functional groups such as acidic groups on other second monomers.

Crosslinkers with multiple (meth)acryloyl groups can be di(meth)acrylates, tri(meth)acrylates, tetra(meth)acrylates, penta(meth)acrylates, and the like. These crosslinkers can be formed, for example, by reacting (meth)acrylic acid with a polyhydric alcohol (i.e., an alcohol having at least two hydroxyl groups). The polyhydric alcohol often has two, three, four, or five hydroxyl groups. Mixtures of crosslinkers can be used.

In many embodiments, the crosslinkers contain at least two (meth)acryloyl groups. Exemplary crosslinkers with two acryloyl groups include 1,2-ethanediol diacrylate, 1,3-propanediol diacrylate, 1,9-nonanediol diacrylate, 1,12-dodecanediol diacrylate, 1,4-butanediol diacrylate, 1,6-hexanediol diacrylate, butylene glycol diacrylate, bisphenol A diacrylate, diethylene glycol diacrylate, triethylene glycol diacrylate, tetraethylene glycol diacrylate, tripropylene glycol diacrylate, polyethylene glycol diacrylate, polypropylene glycol diacrylate, polyethylene/polypropylene copolymer diacrylate, polybutadiene di(meth)acrylate, propoxylated glycerin tri(meth)acrylate, and neopentylglycol hydroxypivalate diacrylate modified caprolactone.

Exemplary crosslinkers with three or four (meth)acryloyl groups include, but are not limited to, trimethylolpropane triacrylate (e.g., commercially available under the trade designation TMPTA-N from Cytec Industries, Inc., Smyrna, GA and under the trade designation SR-351 from Sartomer, Exton, PA), pentaerythritol triacrylate (e.g., commercially available under the trade designation SR-444 from Sartomer), tris(2-hydroxyethylisocyanurate) triacrylate (e.g., commercially available under the trade designation SR-368 from Sartomer), a mixture of pentaerythritol triacrylate and pentaerythritol tetraacrylate (e.g., commercially available from Cytec Industries, Inc., under the trade designation PETIA with an approximately 1:1 ratio of tetraacrylate to triacrylate and under the trade designation PETA-K with an approximately 3:1 ratio of tetraacrylate to triacrylate), pentaerythritol tetraacrylate (e.g., commercially available under the trade designation SR-295 from Sartomer), di-trimethylolpropane tetraacrylate (e.g., commercially available under the trade designation SR-355 from Sartomer), and ethoxylated pentaerythritol tetraacrylate (e.g., commercially available under the trade designation SR-494 from Sartomer). An exemplary crosslinker with five (meth)acryloyl groups includes, but is not limited to, dipentaerythritol pentaacrylate (e.g., commercially available under the trade designation SR-399 from Sartomer).

In some embodiments, the crosslinkers are polymeric material that contains at least two (meth)acryloyl groups. For example, the crosslinkers can be poly(alkylene oxides) with at least two acryloyl groups (e.g., polyethylene glycol diacrylates commercially available from Sartomer such as SR210, SR252, and SR603) or poly(urethanes) with at least two (meth)acryloyl groups (e.g., polyurethane diacrylates such as CN9018 from Sartomer). As the higher molecular weight of the crosslinkers increases, the resulting acrylic copolymer tends to have a higher elongation before breaking. Polymeric crosslinkers tend to be used in greater weight percent amounts compared to their non-polymeric counterparts.

Other types of crosslinkers can be used rather than those having at least two (meth)acryloyl groups. The crosslinker can have multiple groups that react with functional groups such as acidic groups on other second monomers. For example, monomers with multiple aziridinyl groups can be used that are reactive with carboxyl groups. For example, the crosslinkers can be a bis-amide crosslinker as described in US Patent 6,777,079 (Zhou et al.).

In other methods of crosslinking, photocrosslinkers (e.g., UV photocrosslinkers) are added. These photocrosslinkers can be copolymerizable with the various monomers used to form the elastomeric material (e.g., copolymerizable benzophenones) or can be added after polymerization. Suitable photocrosslinkers added after polymerization include, for example, multifunctional benzophenones, triazines (such as XL-330, which is 2,4,-bis(trichloromethyl)-6-(4-methoxyphenyl)-triazine from 3M Company, Saint Paul, MN), acetophenones, and the like.

If present, a crosslinker can be used in any suitable amount. In many embodiments, the crosslinker is present in an amount of up 5 parts by weight based on a total weight of polymerizable material. In some embodiments, the crosslinker is present in an amount up to 4 weight percent, up to 3 weight percent, up to 2 weight percent, or up to 1 weight percent. The crosslinker can be present, for example, in amounts greater than 0.01 weight percent, greater than 0.05 weight percent, or greater than 1 weight percent. In some embodiments, the crosslinker is present in an amount in a range of 0 to 5 weight percent, 0.01 to 5 weight percent, 0.05 to 5 weight percent, 0 to 3 weight percent, 0.01 to 3 weight percent, 0.05 to 3 weight percent, 0 to 1 weight percent, 0.01 to 1 weight percent, or 0.05 to 1 weight percent.

As an alternative to adding crosslinkers or photocrosslinkers, the (meth)acrylic-based elastomeric material can be crosslinked using high energy electromagnetic radiation such as gamma radiation or electron beam radiation.

In some aspects, the (meth)acrylic-based elastomeric material of the multilayer PSA film according to the invention is prepared from at least 50 weight percent of the first monomer of Formula (I) and up to 50 weight percent of the second monomer based on a total weight of polymerizable material. The second monomer can be any of those described above. For example, the second monomer can be a non-polar (meth)acrylate ester that is not of Formula (I), a non-polar vinyl monomer without a (meth)acryloyl group, a polar monomer, a crosslinker, or a combination thereof. Some (meth)acrylic-based elastomeric materials are formed from 50 to 99.5 weight percent of the first monomer and 0.5 to 50 weight percent of the second monomer, 50 to 99 weight percent of the first monomer and 1 to 50 weight percent of the second monomer, 60 to 99 weight percent of the first monomer and 1 to 40 weight percent of the second monomer, 70 to 99 weight percent of the first monomer and 1 to 30 weight percent of the second monomer, 80 to 99 weight percent of the first monomer and 1 to 20 weight percent of the second monomer, 85 to 99 weight percent of the first monomer and 1 to 15 weight percent of the second monomer, or 90 to 99 weight percent of the first monomer and 1 to 10 weight percent of the second monomer. The weight percent is based on a total weight of polymerizable material used to form the (meth)acrylic-based elastomeric material.

In some more specific executions, the (meth)acrylic-based elastomeric material for the multilayer PSA film according to the invention is prepared from a polymerizable material that includes at least 50 weight percent of the first monomer of Formula (I) and up to 15 weight percent of a second monomer that is a polar monomer. For example, the polymerizable material can include 50 to 99.5 weight percent of the monomer of Formula (I) and 0.5 to 15 weight percent of the polar monomer monomer, 50 to 99 weight percent of the monomer of Formula (I) and 1 to 15 weight percent of the polar monomer, 60 to 99 weight percent of the monomer of Formula (I) and 1 to 15 weight percent of the polar monomer, 70 to 99 weight percent of the monomer of Formula (I) and 1 to 15 weight percent of the polar monomer, 80 to 99 weight percent of the monomer of Formula (I) and 1 to 15 weight percent of the polar monomer, or 85 to 99 weight percent of the monomer of Formula (I) and 1 to 15 weight percent of the polar monomer. Other non-polar monomers not of Formula (I), crosslinkers, or both can be added to any of these polymerizable materials to bring the total to 100 weight percent. For example, the polymerizable material can include at least 1 weight percent non-polar monomers not of Formula (I) such as 1 to 30 weight percent, 1 to 20 weight percent, or 1 to 10 weight percent. As another example, any of the polymerizable materials can include up to 5 weight percent crosslinker such as 0.01 to 5 weight percent, 0.05 to 5 weight percent, or 1 to 5 weight percent.

An initiator for free radical polymerization is typically added to the various monomers used to form the (meth)acrylic-based elastomeric material. The polymerization initiator can be a thermal initiator, a photoinitiator, or both. Any suitable thermal initiator or photoinitator known for free radical polymerization reactions can be used. The initiator is typically present in an amount in the range of 0.01 to 5 weight percent, in the range of 0.01 to 2 weight percent, in the range of 0.01 to 1 weight percent, or in the range of 0.01 to 0.5 weight percent based on a total weight of polymerizable material in the first polymerizable mixture.

As used herein, the polymerizable mixture (i.e., polymerizable reaction mixture) refers to the polymerizable material plus any other components added to the polymerizable materials to prepare the polymerized product.

In some executions, a thermal initiator is used. Thermal initiators can be water-soluble or water-insoluble (i.e., oil-soluble) depending on the particular polymerization method used. Suitable water-soluble initiators include, but are not limited to, persulfates such as potassium persulfate, ammonium persulfate, sodium persulfate, and mixtures thereof; an oxidation-reduction initiator such as the reaction product of a persulfate and a reducing agent such as a metabisulfite (e.g., sodium metabisulfite) or a bisulfate (e.g., sodium bisulfate); or 4,4'-azobis(4-cyanopentanoic acid) and its soluble salts (e.g., sodium, potassium). Suitable oil-soluble initiators include, but are not limited to, various azo compound such as those commercially available under the trade designation VAZO from E. I. DuPont de Nemours Co. including VAZO 67, which is 2,2'-azobis(2-methylbutane nitrile), VAZO 64, which is 2,2'-azobis(isobutyronitrile), and VAZO 52, which is (2,2'-azobis(2,4-dimethylpentanenitrile); and various peroxides such as benzoyl peroxide, cyclohexane peroxide, lauroyl peroxide, and mixtures thereof.

In many executions, a photoinitiator is used. Some exemplary photoinitiators are benzoin ethers (e.g., benzoin methyl ether or benzoin isopropyl ether) or substituted benzoin ethers (e.g., anisoin methyl ether). Other exemplary photoinitiators are substituted acetophenones such as 2,2-diethoxyacetophenone or 2,2-dimethoxy-2-phenylacetophenone (commercially available under the trade designation IRGACURE 651 from BASF Corp. (Florham Park, NJ) or under the trade designation ESACURE KB-1 from Sartomer (Exton, PA)). Still other exemplary photoinitiators are substituted alpha-ketols such as 2-methyl-2-hydroxypropiophenone, aromatic sulfonyl chlorides such as 2-naphthalenesulfonyl chloride, and photoactive oximes such as 1-phenyl-1,2-propanedione-2-(O-ethoxycarbonyl)oxime. Other suitable photoinitiators include, for example, 1-hydroxy cyclohexyl phenyl ketone (IRGACURE 184), bis(2,4,6-trimethylbenzoyl)phenylphosphineoxide (IRGACURE 819), 1-[4-(2-hydroxyethoxy)phenyl]-2-hydroxy-2-methyl-1-propane-1-one (IRGACURE 2959), 2-benzyl-2-dimethylamino-1-(4-morpholinophenyl)butanone (IRGACURE 369), 2-methyl-1-[4-(methylthio)phenyl]-2-morpholinopropan-1-one (IRGACURE 907), and 2-hydroxy-2-methyl-1-phenyl propan-1-one (DAROCUR 1173).

The polymerizable mixture may optionally further contain chain transfer agents to control the molecular weight of the resultant elastomeric material. Examples of useful chain transfer agents include, but are not limited to, carbon tetrabromide, alcohols, mercaptans such as isooctylthioglycolate, and mixtures thereof. If used, the polymerizable mixture may include up to 0.5 weight of a chain transfer agent based on a total weight of polymerizable material. For example, the polymerizable mixture can contain 0.01 to 0.5 weight percent, 0.05 to 0.5 weight percent, or 0.05 to 0.2 weight percent chain transfer agent.

The polymerizable mixture used to form the (meth)acrylic-based elastomeric material for the pressure sensitive adhesive layer(s) of the multilayer PSA film according to the invention may include an organic solvent or may be free or essentially free of an organic solvent. As used herein, the term "essentially free" in reference to an organic solvent means that the means that the organic solvent is present in an amount less than 5 weight percent, less than 4 weight percent, less than 3 weight percent, less than 2 weight percent, or less than 1 weight percent based on the weight of the polymerizable mixture or polymerizable material. If an organic solvent is included in the polymerizable mixture, the amount is often selected to provide the desired viscosity. Examples of suitable organic solvents include, but are not limited to, methanol, tetrahydrofuran, ethanol, isopropanol, heptane, acetone, methyl ethyl ketone, methyl acetate, ethyl acetate, toluene, xylene, and ethylene glycol alkyl ether. Those solvents can be used alone or as mixtures thereof.

The (meth)acrylic-based elastomeric material may be prepared by a variety of conventional free radical polymerization methods, including solution, bulk (i.e., with little or no solvent), dispersion, emulsion, and suspension processes. The particular method used may be influenced by the use of the final pressure-sensitive adhesive composition. The resulting (meth)acrylic-based elastomeric materials can be random or block copolymers.

To be useful as a pressure-sensitive adhesive, the elastomeric material typically has a storage modulus less than 300,000 Pascals at 25°C. The storage modulus of the (meth)acrylic-based elastomeric material usually is no greater than 200,000 Pascals, no greater than 100,000 Pascals, no greater than 50,000 Pascals, or no greater than 25,000 Pascal at 25°C. For example, the storage modulus can be no greater than 10,000 Pascals, no greater than 9,000 Pascals, no greater than greater than 8,000 Pascals, or no greater than 7,500 Pascals at 25°C. A lower storage modulus is often desirable for high performance pressure-sensitive adhesives.

In some executions, the (meth)acrylic-based elastomeric materials themselves may function as a pressure-sensitive adhesive. In other embodiments, one or more tackifiers, one or more plasticizers, or a mixture thereof can be combined with the elastomeric materials. Tackifiers (i.e., tackifying agents or tackifying resins) and plasticizers (i.e., plasticizing agents) are often added to modulate the Tg, modulate the storage modulus, and to alter the tackiness of the pressure-sensitive adhesive.

Any tackifiers that are included in the pressure-sensitive adhesive compositions are typically selected to be miscible with the (meth)acrylic-based elastomeric material. Any tackifier typically included in conventional pressure-sensitive adhesive compositions can be used. Either solid or liquid tackifiers can be added. Solid tackifiers generally have a number average molecular weight (Mn) of 10,000 grams per mole or less and a softening point above about 70°C. Liquid tackifiers are viscous materials that have a softening point of about 0°C to about 70°C.

Suitable tackifying resins include rosin resins such as rosin acids and their derivatives (e.g., rosin esters); terpene resins such as polyterpenes (e.g., alpha pinene-based resins, beta pinene-based resins, and limonene-based resins) and aromatic-modified polyterpene resins (e.g., phenol modified polyterpene resins); coumarone-indene resins; and petroleum-based hydrocarbon resins such as C5-based hydrocarbon resins, C9-based hydrocarbon resins, C5/C9-based hydrocarbon resins, and dicyclopentadiene-based resins. These tackifying resins, if added, can be hydrogenated to lower their color contribution to the pressure-sensitive adhesive composition. Combinations of various tackifiers can be used if desired.

Tackifiers that are rosin esters are the reaction products of various rosin acids and alcohols. These include, but are not limited to, methyl esters of rosin acids, triethylene glycol esters of rosin acids, glycerol esters of rosin acids, and pentaertythritol esters of rosin acids. These rosin esters can be hydrogenated partially or fully to improve stability and reduce their color contribution to the pressure-sensitive adhesive composition. The rosin resin tackifiers are commercially available, for example, from Eastman Chemical Company under the trade designations PERMALYN, STAYBELITE, and FORAL as well as from Newport Industries under the trade designations NUROZ and NUTAC. A fully hydrogenated rosin resin is commercially available, for example, from Eastman Chemical Company under the trade designation FORAL AX-E. A partially hydrogenated rosin resin is commercially available, for example, from Eastman Chemical Company under the trade designation STAYBELITE-E.

Tackifiers that are hydrocarbon resins can be prepared from various petroleum-based feed stocks. There feedstocks can be aliphatic hydrocarbons (mainly C5 monomers with some other monomers present such as a mixture of trans-1,3-pentadiene, cis-1,3-pentadiene, 2-methyl-2-butene, dicyclopentadiene, cyclopentadiene, and cyclopentene), aromatic hydrocarbons (mainly C9 monomers with some other monomers present such as a mixture of vinyl toluenes, dicyclopenetadiene, indene, methylstyrene, styrene, and methylindenes), or mixtures thereof. Tackifiers derived from C5 monomers are referred to as C5-based hydrocarbon resins while those derived from C9 monomers are referred to as C9-based hydrocarbon resins. Some tackifiers are derived from a mixture of C5 and C9 monomers or are a blend of C5-based hydrocarbon tackifiers and C9-based hydrocarbon tackifiers. These tackifiers can be referred to as C5/C9-based hydrocarbon tackifiers. Any of these resins can be partially or fully hydrogenated to improve their color and thermal stability.

The C5-based hydrocarbon resins are commercially available from Eastman Chemical Company under the trade designations PICCOTAC and EASTOTAC, from Cray Valley under the trade designation WINGTACK, from Neville Chemical Company under the trade designation NEVTAC LX, and from Kolon Industries, Inc. under the trade designation HIKOREZ. The C5-based hydrocarbon resins are commercially available from Eastman Chemical with various degrees of hydrogenation under the trade designation EASTOTACK.

The C9-based hydrocarbon resins are commercially available from Eastman Chemical Company under the trade designation PICCO, KRISTLEX, PLASTOLYN, and PICCOTAC, and ENDEX, from Cray Valley under the trade designations NORSOLENE, from Ruetgers N.V. under the trade designation NOVAREZ, and from Kolon Industries, Inc. under the trade designation HIKOTAC. These resins can be partially or fully hydrogenated. Prior to hydrogenation, the C9-based hydrocarbon resins are often about 40 percent aromatic as measured by proton Nuclear Magnetic Resonance. Hydrogenated C9-based hydrocarbon resins are commercially available, for example, from Eastman Chemical under the trade designations REGALITE and REGALREX that are 50 to 100 percent (e.g., 50 percent, 70 percent, 90 percent, and 100 percent) hydrogentated. The partially hydrogenated resins typically have some aromatic rings.

Various C5/C9-based hydrocarbon tackifiers are commercially available from Arakawa under the trade designation ARKON, from Zeon under the trade designation QUINTONE, from Exxon Mobile Chemical under the trade designation ESCOREZ, and from Newport Industries under the trade designations NURES and H-REZ (Newport Industries).

The high solubility parameter of most conventional (meth)acrylic-based elastomeric materials and the presence of specific potential interactions between these elastomeric materials and many tackifiers has limited the tackifiers that are suitable for use in many conventional pressure-sensitive adhesive compositions. As a class, the C5-based hydrocarbon resins and C9-based hydrocarbon resins, and especially hydrogenated versions of these hydrocarbon resins, have been considered unsuitable for use with most conventional (meth)acrylic-based elastomeric materials. That is, there is a solubility mismatch between the relatively polar conventional (meth)acrylic-based elastomeric materials and the non-polar hydrogenated hydrocarbon resin tackifiers.

In contrast to conventional (meth)acrylic-based elastomeric material, the (meth)acrylic-based elastomeric materials prepared using a monomer of Formula (I) have greater compatibility with petroleum-based resins such as the C5-based hydrocarbon resins, the C9-based hydrocarbon resin, the C5/C9-based hydrocarbon resins, and hydrogenated versions of any of these resins. The resulting pressure-sensitive adhesive can appear clear and can remain clear even after aging at temperatures such as 70°C for 1 week.

Based on solubility considerations, the rosin ester tackifiers and selected terpene resins such as phenol-modified terpene and alpha-pinene based resins have performed well in pressure-sensitive adhesive compositions containing conventional (meth)acrylic-based elastomeric materials.. However, some problems are still associated with the use of these tackifiers. For example, pressure-sensitive adhesive compositions containing these tackifiers are often discolored or yellow. The yellow appearance is a direct result of the distinct yellow tinge inherent in many of these tackifiers. Upon aging (e.g., at 70°C for 1 week) and exposure to light, this discoloration can become even more pronounced, even with lighter colored grades of resin. (Meth)acrylic-based pressure-sensitive adhesives without tackifiers typically have excellent aging properties. The yellow appearance can often be minimized by hydrogenation of the tackifiers but the resulting hydrogenated resins are often not as compatible with conventional (meth)acrylic-based elastomers as their non-hydrogenated equivalents.

Tackified pressure-sensitive adhesives containing conventional (meth)acrylic-based elastomeric materials can also appear cloudy, demonstrating a loss in the characteristic transparency of the conventional (meth)acrylic-based elastomeric materials. The cloudiness is an indication of limited or incomplete compatibility of the tackifier and the elastomeric material. The reduced compatibility can lead to a degradation of adhesive properties, as evidenced by a loss of tack or reduced peel adhesion on aging. In some cases, the addition of a tackifier to a pressure-sensitive adhesive composition having acrylic monomers, polymers, oligomers, and any mixture thereof, can be clear and appear to be compatible. However, after removing the solvent, curing, or aging, the pressure-sensitive adhesive can become cloudy, which indicates at least some incompatibility between the tackifier and the conventional (meth)acrylic-based elastomeric material.

In addition to these losses in clarity and stability of tackified pressure-sensitive adhesive compositions, other deleterious effects can be observed when tackifiers are present during the polymerization reaction used to form the conventional (meth)acrylic-based elastomeric materials. Depending on the structure of the tackifier, undesirable effects of adding a tackifier include the inhibition or retardation of the polymerization reaction and/or the alteration of the final polymer structure if the tackifier acts as a chain-transfer or chain-terminating agent. Such effects can adversely influence the performance and stability of elastomeric materials prepared in the presence of these tackifiers. Chain termination can also result in undesirably high residual volatile materials. These effects can be minimized or eliminated through the use of hydrogenated tackifiers that do not have ethylenically unsaturated groups.

The (meth)acrylic-based esters formed using an alkyl (meth)acrylate of Formula (I) are typically compatible with (i.e., miscible with) hydrogenated tackifiers. The hydrogenated tackifiers can be at least partially hydrogenated to remove any double bonds that are not part of a ring structure. That is, the tackifiers can be hydrogenated such that they are at least free of ethylenically unsaturated bonds. In some embodiments, the hydrogenated tackifiers have ring structures that are unsaturated. These tackifiers are only partially hydrogenated and may contain, for example, aromatic rings. In other embodiments, any double bonds that are not part of a ring structure plus at least some of the double bonds in ring structures are hydrogenated. In still other embodiments, the tackifiers are fully hydrogenated including any ring structures. The hydrogenated tackifiers can be, for example, hydrogenated terpene resins, hydrogenated rosin resins, hydrogenated C5-based hydrocarbon resins, hydrogenated C9-baed hydrocarbon resins, or combinations thereof.

The use of the elastomeric materials prepared using alkyl acrylates of Formula (I) are more compatible with hydrogenated tackifiers and, in particular, are more combatible with fully hydrogenated tackifiers. Compared to conventional (meth)acrylic-based elastomeric materials prepared from C₈ alkyl acrylates, these pressure-sensitive adhesive often have a higher clarity after curing and/or after aging at 70°C for 1 week. The higher clarity tends to indicate improved compatibility between the elastomeric material and the tackifier. This improved compatibility is often reflected in improved adhesive strength (e.g., as measured using 180 degree peel strength) and improved shear holding force.

Any of the tackifiers may be used in amounts of up to 100 parts relative to 100 parts of the (meth)acrylic-based elastomeric material. It is however preferred to use lower amounts of tackifiers. For example, the tackifiers can be used in amounts up to 50 parts, up to 45 parts, up to 40 parts, up to 35 parts, or up to 30 parts. The amount of tackifier can be for example, in the range of 3 to 50 parts, in the range of 3.5 to 45 parts, in the range of 4 to 40 parts, in the range of 4.5 to 35 parts, or in the range of 5 to 30 parts based on 100 parts of the (meth)acrylic-based elastomeric material.

Some pressure-sensitive adhesive compositions useful for the multilayer PSA film according to the invention may include one or more plasticizers. The plasticizer is typically selected to be compatible with (i.e., miscible with) the other components in the composition such as the (meth)acrylic elastomeric material and any optional tackifier. Suitable plasticizers include, but are not limited to, various polyalkylene oxides (e.g., polyethylene oxides or propylene oxides), adipic acid esters, formic acid esters, phosphoric acid esters, benzoic acid esters, phthalic acid esters, and sulfonamides, or naphthenic oils.

In some methods of preparing the pressure-sensitive adhesive for the pressure sensitive adhesive layer(s) of the multilayer PSA film according to the invention, the polymerizable mixture containing the monomers used to form the (meth)acrylic-based elastomeric material are partially polymerized to increase the viscosity to that corresponding to a syrup-like material. Often, the alkyl (meth)acrylate monomer of Formula (I) and other optional monovalent monomers are mixed with a portion of the free radical polymerization initiator. Depending on the type of initiator added, the mixture is exposed to actinic radiation or heat to partially polymerize the monovalent monomers (i.e., monomers with a single ethylenically unsaturated group). Then, the crosslinker and any remaining portion of the initiator are added to the syrup-like, partially polymerized material. Optional tackifiers and plasticizers can also be combined with the partially polymerized material. The resulting mixture can be more readily applied as a coating composition onto a support (e.g., release liner) or another layer (e.g., backing layer). The coating layer can then be exposed to actinic radiation if a photoinitator is present or to heat if a thermal initiator is present. Exposure to actinic radiation or heat results in the further reaction of polymerizable material within the coating composition.

As far as the build-up of the multilayer PSA film of the invention is concerned, the PSA film comprises at least the first pressure sensitive adhesive layer and at least one opposing layer. The opposing layer can be a non-tacky backing layer or may have pressure sensitive adhesive characteristics as well. In the latter execution, the opposing layer is a second pressure sensitive adhesive layer.

The present invention is however not limited to two layered films. For example, the multilayer PSA film of the invention may comprise also three, four, five or even more superimposed layers. In such an execution, it is further preferred that the outermost layers are the first and second pressure sensitive adhesive layers. The layers sandwiched in between are referred to as intermediate layer(s). In other words, in such an execution the multilayer film comprises at least one intermediate layer between the first pressure sensitive adhesive layer and the second pressure sensitive adhesive layer.

The composition of the second pressure sensitive adhesive layer can be chosen from any known PSA system. In particular, the opposing layer and/ or the intermediate layer comprise a polymer chosen from the group consisting of polyacrylates, polyurethanes, polyolefins, polystyrene, natural rubbers, synthetic rubbers,polyvinylpyrrolidone, and any combinations or mixtures thereof.

However it is also possible that the opposing layer and/ or the intermediate layer(s) is chosen from a pressure sensitive adhesive composition as described in this invention for the first PSA layer. The formulation of the second pressure sensitive adhesive layer can be both identical or different compared to the first pressure sensitive adhesive layer.

Besides those materials listed above, the opposing and/or intermediate layer may comprise or consist of a backing film. Suitable backing films can be made from plastics (e.g., polypropylene, including biaxially oriented polypropylene, vinyl, polyethylene, polyester such as polyethylene terephthalate), nonwovens (e.g., papers, cloths, nonwoven scrims), metal foils, foams (e.g., polyacrylic, polyethylene, polyurethane, neoprene), and the like. Foams are commercially available from various suppliers such as 3M Co., Voltek, Sekisui, and others. The foam may be formed as a coextruded sheet with the pressure-sensitive adhesive composition on one or both sides of the foam, or the pressure-sensitive adhesive composition may be laminated to it. When the adhesive is laminated to the substrate, it may be desirable to treat the surface of the substrate to improve the adhesion. Such treatments are typically selected based on the nature of the materials of the adhesive and of the substrate and include primers and surface modifications (e.g., corona treatment, surface abrasion).

For a single-sided multilayer PSA film, the side of the opposing layer surface opposite of the first pressure sensitive adhesive layer is typically coated with a suitable release material. Release materials are known and include materials such as, for example, silicones, polyethyleness, polycarbamates, polyacrylics, and the like.

In another embodiment of the multilayer PSA film according to invention, the first pressure sensitive adhesive layer, the opposing layer and/ or the intermediate layer may optionally comprise at least one filler material which is preferably selected from the group consisting of filler particles, microspheres, expendable microspheres, preferably pentane filled expendable microspheres or gaseous cavities, glassbeads, glass microspheres, hydrophobic silica type fillers, hydrophilic silica type fillers, fibers, electrically and/or thermally conducting particles, nano particles, and any combinations thereof; and wherein the intermediate layer preferably comprises an aluminium silicate, more preferably expanded perlite. Such fillers may be used to increase the mechanical stability of the PSA film and may also increase the shear and peel force resistance.

From the filler particles set out above, expanded perlite is especially preferred. Perlite is a naturally occurring hydrated volcanic glass formed by the alteration of obsidian. Typically, perlite is composed of silicon dioxide (70 - 75 wt.%), aluminium oxide (12 - 17 wt.%), sodium oxide (3 - 4 wt.%), potassium oxide (3 - 5 wt.%), iron oxide (0.5 - 2 wt.%), magnesium oxide (0.2 - 0.7 wt.%) and calcium oxide (0.5 - 1.5 wt.%). Natural perlite further contains about 3 - 5 wt.% water.

The perlite for use in the present invention is expanded in order to obtain very low density bubbles in the material, which is accomplished because of the presence of water in the crude perlite rock. Upon accelerated heating to above 870°C, the crude perlite rock pops in a manner similar to popcorn as the glass ore particles soften in the flame and the water in the ore turns to steam and expends forming the numerous low density bubbles previously mentioned. This process for expanding perlite is known.

In the present invention, expanded perlite is used in particulate form, whereas the expanded perlite particles have in particular an average diameter from 1 - 300 µm, in particular from 10 - 150 µm. Expanded perlite particles of that size are available on the market and can be produced by crushing the expanded perlite obtained by the heat treatment of perlite rock as set out above.

The amounts of expanded perlite which may be added to any of the layers of the multilayer pressure sensitive adhesive film of the invention may vary in broad ranges. It is especially preferred to add the expanded perlite to the opposing layer and/ or the intermediate layer, especially if these layers do not have PSA characteristics. In particular, the expanded perlite content may range from 1 - 30 wt.% with reference to the composition of the backing layer, in particular from 2 - 20 wt.%. However, the present invention is not limited to the before mentioned ranges. The multilayer PSA films with such contents in the backing layer reveal especially high peel adhesion forces, particularly on clear coat surfaces.

As set out above, expanded perlite is a porous material. The porosity ensures that the addition of such a filler material does not increase the overall weight of the PSA-film but even in the contrary may reduce the overall weight. Hence, it is preferred that the expanded perlite being used has a compacted density of 680 to 850 mL/100g

In this context, it is further preferred that the expanded perlite particles exhibit a surface modification, which is preferably chosen from hydrophobic surface modifications, like a silane surface modification and/ or a hydrophilic modification like an epoxydation, amination or an acrylate functionalization. Without wishing to be bound by theory, it is believed that the hydrophobic modifications further enhance the adhesion to glass surfaces for example and may also lead to weaker interactions between the polymeric matrix and the filler and therefore to an improved deformability of the adhesive. Still without wishing to be bound by theory, it is believed that this effect leads to a better stress distribution in the adhesive layer resulting in improved peel performance especially on critical to adhere surfaces. The hydrophilic modifications may serve to improve adhesion to the polymer matrix of the layer in which the filler is incorporated. The epoxydation, amination and acrylate functionalization can be achieved by a reaction with aminosilane, epoxysilane and acrylic silanes for example.

Other additives may be included in the first pressure sensitive adhesive layer, the opposing layer and/ or the intermediate layer to change their respective properties. Such additives, include pigments, tackifiers, toughening agents, reinforcing agents, fire retardants, antioxidants, and stabilizers. The additives are added in amounts sufficient to obtain the desired end properties.

According to another preferred execution of this invention, the multilayer PSA film is provided on at least one of its major surfaces with a release liner. As release liner, any suitable material known to the skilled person can be used like a siliconized paper or siliconized polymeric film material, in particular a siliconized PET-film.

The thickness of the pressure sensitive adhesive layer(s), the opposing layer and the intermediate layer may vary in wide ranges. For example, the thickness can be chosen independently for each layer between 25 µm and 3,000 µm, more preferably between 75 µm and 2,000 µm and especially preferably between 75 µm and 1,500 µm. It is however preferred that the pressure sensitive adhesive layer(s) exhibits a lower thickness compared to the intermediate and/ or opposing layer. As an example, the thickness of the PSA layer may be in the range from 20 to 200 µm whereas the opposing layer accounts to 800 to 2000 µm in thickness. Such multilayer PSA films exhibit high peel adhesion, probably caused by a stabilizing effect of the relatively thick opposing layer compared to the PSA layer.

The present invention is further directed to a method for manufacturing a multilayer pressure sensitive adhesive film according to one aspect of the invention, whereby the first pressure sensitive adhesive layer and the opposing layer are superimposed on one another.

In one execution of this method, the first pressure sensitive adhesive layer and the opposing layer and - if desired also the intermediate layer(s) - are prepared separately and afterwards laminated to each other.

In an alternative method for manufacturing a multilayer pressure sensitive adhesive film according to this invention, a liquid precursor of a first pressure sensitive adhesive layer and a liquid precursor of the opposing layer and - if desired also the intermediate layer(s) - are superimposed and then cured, in particular with actinic radiation such as UV, γ (gamma) or e-beam radiation or by thermal curing. This method is in detail described in WO 2011094385(A1), the content of which is herewith incorporated by reference.

However, the production of the inventive multilayer film is not limited to the before mentioned methods. For instance, the multilayer PSA -film may be produced by coextrusion, solvent-based methods or also combinations thereof.

The present invention is further directed to the use of a multilayer pressure sensitive adhesive film according to this invention as a PSA film to be bonded with its first pressure sensitive adhesive layer to a LSE substrate surface, preferably to a clear coat surface.

As set out above, the multilayer PSA film according to this invention is particularly useful for forming strong adhesive bonds to low surface energy (LSE) substrates. However, even though the multilayer pressure-sensitive adhesive films bond well to low surface energy surfaces, the use of these adhesive films is not limited to low surface energy substrates. The multilayer pressure-sensitive adhesive films according to the invention typically bond well to higher surface energy substrates such as, for example, other plastics, ceramics (e.g., glass), and metals.

The substrate to which the multilayer PSA film according to the invention may be applied is selected depending on the particular application. For example, the multilayer PSA film can be applied to sheeting products (e.g., decorative graphics and reflective products), label stock, and tape backings. Additionally, the multilayer PSA film may be applied directly onto a substrate such as an automotive panel, or a glass window so that another substrate or object can be attached to the panel or window, in particular to clear coat surfaces.

Item 1 is a multilayer pressure sensitive adhesive (PSA) film, having a first pressure sensitive adhesive layer and at least one opposing layer, wherein the first pressure sensitive adhesive layer comprises a pressure-sensitive adhesive composition with a (meth)acrylic-based elastomeric material comprising a reaction product of polymerizable material containing:
(a) a first monomer which is an alkyl (meth)acrylate ester of a primary alcohol R¹-OH, the alkyl (meth)acrylate ester being of Formula (I)

   CH₂=C(R²)-(CO)-OR¹ (I)

   wherein
   R¹ is an alkyl having 14 to 25 carbon atoms and the primary alcohol R¹-OH has an iso number equal to at least 2 but no greater than 4,
   R² is hydrogen or methyl; and
(b) a second monomer having an ethylenically unsaturated group.

Item 2 is the multilayer PSA film of item 1, wherein the first monomer comprises a plurality of different alkyl (meth)acrylate esters of Formula (I).

Item 3 is the multilayer PSA film of item 1 or 2, wherein the first monomer comprises a plurality of structural isomers of Formula (I).

Item 4 is the multilayer PSA film according to any of the preceding items, wherein each R¹ has from 17 to 21 carbon atoms.

Item 5 is the multilayer PSA film according to any of the preceding items, wherein each R¹ has 17 carbon atoms.

Item 6 is the multilayer PSA film according to any of the preceding items, wherein the second monomer is selected from the group consisting of non-polar (meth)acrylate esters that are not of Formula (I), non-polar vinyl monomers without a (meth)acryloyl group, polar monomers, crosslinkers, and any combinations or mixtures thereof.

Item 7 is the multilayer PSA film according to item 6, wherein the polar monomer comprises an acidic group, a hydroxyl group, or a nitrogen-containing group, wherein the acidic group is preferably a carboxyl group or a salt thereof.

Item 8 is the multilayer PSA film according to any of the preceding items, wherein the second monomer comprises a strongly polar acrylate, which is preferably selected from the group consisting of acrylic acids, methacrylic acids, itaconic acids, hydroxyalkyl acrylates, acrylamides and substituted acrylamides, and any combinations or mixtures thereof.

Item 9 is the multilayer PSA film according to any of the preceding items, wherein the polymerizable material comprises from 50 to 99.5 weight percent of the alkyl (meth)acrylate ester of Formula (I) and from 0.5 to 50 weight percent of the second monomer based on a total weight of polymerizable material.

Item 10 is the multilayer PSA film according to any of the preceding items, wherein the polymerizable material comprises at least 50 weight percent of the alkyl (meth)acrylate ester of Formula (I) and up to 15 weight percent of a polar monomer based on a total weight of polymerizable material.

Item 11 is the multilayer PSA film according to any of the preceding items, wherein the polymerizable material comprises at least 1 weight percent of a non-polar monomer not of Formula (I).

Item 12 is the multilayer PSA film according to any of items 8 to 11, wherein the polymerizable material comprises up to 10 weight percent, preferably from 1 to 8 weight percent, more preferably from 2 to 6 weight percent of the strongly polar acrylate based on a total weight of polymerizable material.

Item 13 is the multilayer PSA film according to any of the preceding items, wherein the polymerizable material comprises up to 5 weight percent of a crosslinker.

Item 14 is the multilayer PSA film according to any of the preceding items, wherein the first pressure-sensitive adhesive layer further comprises a tackifier, preferably from 3 to 50 parts of tackifier per 100 parts of (meth)acrylic-based elastomeric material, more preferably from 5 to 30 parts of tackifier per 100 parts of (meth)acrylic-based elastomeric material.

Item 15 is the multilayer PSA film according to item 14, wherein the tackifier is selected from the group consisting of C5-based hydrocarbon resins, C9-based hydrocarbon resins, C5/C9-based hydrocarbon resins, and any combinations or mixtures thereof.

Item 16 is the multilayer PSA film according to item 14, wherein the tackifier is selected from the group consisting of hydrogenated terpene resins, hydrogenated rosin resins, hydrogenated C5-based hydrocarbon resins, hydrogenated C9-based hydrocarbon resins, hydrogenated C5/C9-based hydrocarbon resins, and any combinations or mixtures thereof.

Item 17 is the multilayer PSA film according to any of the preceding items, wherein the opposing layer is a second pressure sensitive adhesive layer.

Item 18 is the multilayer PSA film according to item 17, wherein the multilayer film comprises at least one intermediate layer between the first pressure sensitive adhesive layer and the second pressure sensitive adhesive layer.

Item 19 is the multilayer PSA film according to any of the preceding items, wherein the opposing layer and/ or the intermediate layer comprise a polymer base material chosen from the group consisting of polyacrylates, polyurethanes, polyolefins, polystyrene, natural rubbers, synthetic rubbers, polyvinylpyrrolidone, and any combinations or mixtures thereof.

Item 20 is the multilayer PSA film according to any of the preceding items, wherein the polymerizable precursor of the polymer base material for forming the opposing layer, comprises 2-octyl(meth)acrylate, wherein said polymerizable precursor preferably comprises from 85 to 99.5 wt%, more preferably from 90 to 99.5 wt% of 2-octyl(meth)acrylate (based on the total weight of the polymerizable base material used to form the opposing layer).

Item 21 is the multilayer PSA film according to any of the preceding items, wherein the polymerizable material and/or the polymerizable precursor of the polymer base material for forming the opposing layer and/ or the intermediate layer is at least partly derived from biological material, preferably from a plant material, wherein at least 25 wt.-%, preferably at least 40 wt.-% of the polymerizable material and/or the polymerizable precursor of the polymer base material for forming the opposing layer and/ or the intermediate layer are preferably derived from biological material.

Item 22 is the multilayer PSA film according to any of item 20 or 21, wherein the 2-octyl(meth)acrylate is integrally derived from biological material.

Item 23 is the multilayer PSA film according to any of the items, wherein the first pressure sensitive adhesive layer, the opposing layer and/ or the intermediate layer comprise at least one filler material which is preferably selected from the group consisting of filler particles, microspheres, expendable microspheres, preferably pentane filled expendable microspheres or gaseous cavities, glassbeads, glass microspheres, hydrophobic silica type fillers, hydrophilic silica type fillers, fibers, electrically and/or thermally conducting particles, nano particles, and any combinations thereof; and wherein the intermediate layer preferably comprises an aluminium silicate, more preferably expanded perlite.

Item 24 is the multilayer PSA film according to item 23, wherein the expanded perlite expanded perlite particles exhibit a surface modification, which is preferably chosen from hydrophobic surface modifications and/or a hydrophilic. Preferred hydrophobic surface modifications include silane surface modification. Preferred hydrophilic modifications include epoxydation, amination and/or an acrylate functionalisation.

Item 25 is the multilayer PSA film according to any of the preceding items, wherein the PSA film is provided on at least one of its major surfaces with a release liner.

Item 26 is a method for manufacturing a multilayer pressure sensitive adhesive film according to any of items 1 to 25, whereby the first pressure sensitive adhesive layer and the opposing layer are superimposed on one another.

Item 27 is the method according to item 26, wherein the first pressure sensitive adhesive layer and the opposing layer are prepared separately and subsequently laminated to each other.

Item 28 is the method according to item 26, wherein a liquid precursor of the first pressure sensitive adhesive layer and a liquid precursor of the opposing layer are superimposed and then cured, preferably with actinic radiation or by thermal curing. Preferred actinic radiations include UV, γ (gamma), and e-beam radiation.

Item 29 is the use of a multilayer pressure sensitive adhesive film according to any of items 1 to 25 as a PSA film to be bonded with its first pressure sensitive adhesive layer to a LSE substrate surface, preferably to a clear coat surface.

The present invention is explained in more detail with the following examples.

### Test methods applied:

### 90°-Peel-test at 300 mm/min (according to Test Method, Finat No. 2):

Pressure sensitive adhesive film strips according to the present invention and having a width of 10mm and a length > 175mm are cut out in the machine direction from the sample material.

For test sample preparation the liner is first removed from the adhesive coated side of each PSA film strip and then placed, with the adhesive side down on a clean test panel using light finger pressure. Next the test samples are rolled twice in each direction with a standard FINAT test roller (weight 6,8 kg) at a speed of approximately 10 mm per second to obtain intimate contact between the adhesive mass and the surface. After applying the pressure sensitive adhesive film strips to the test panel, the test samples are allowed to dwell 24 hours at ambient room temperature (23°C +/- 2°C, 50% relative humidity +/-5%) prior to testing.

For peel testing the test samples are in a first step clamped in the lower movable jaw of a Zwick tensile tester (Model Z020 commercially available from Zwick/Roell GmbH, Ulm, Germany). The pressure sensitive adhesive film strips are folded back at an angle of 90° and their free ends grasped in the upper jaw of the tensile tester in a configuration commonly utilized for 90° measurements. The tensile tester is set at 300 mm per minute jaw separation rate. Test results are expressed in Newton per 10 mm (N/10 mm) The quoted peel values are the average of four 90°-peel measurements.

### Static shear test @ 70 °C with 500 g handing weights (according to Test Method, Finat No.8):

The static shear is a measure of the cohesiveness or internal strength of an adhesive. It is measured in units of time (minutes) required to pull a standard area of adhesive sheet material from a stainless steel test panel under stress of a constant, standard load.

A PSA film strip of 10 mm width and 20 mm length is cut out in machine direction from the sample. One of the attached surface liners is then removed and the specimen placed with the desired foam side on an aluminium backing. Then the second release liner is removed and the foam is attached to the test substrate (panel), providing a bond area of 20 x 10 mm and using light finger pressure. The standard FINAT test roller (weight 6.8 kg) is rolled twice in each direction at a speed of approximately 10 mm per second to obtain intimate contact between the adhesive mass and the substrate surface (test panel). After applying the foam strip (specimen) to the test panel, the test panel is allowed a dwell time at room temperature (23°C +/-2°C, 50% relative humidity +/-5%) ) for a period of 24 h before testing.

The test panel is then placed in a shear holding device. After a 10 minute dwell time at the test temperature of 70°C for Uregloss and 90 °C for VW-2K, the 500 g load is hung into a hole in the test panel. The timer is started. The results are recorded in minutes until failure and are the average of three shear measurements. A recorded time of "10000+" indicates that the tape did not fail after 10000 min, when the test was stopped.

### Test samples:

The adhesive tests are carried out on the following automotive clear coat panels:
**UreGloss** clearcoat coated panels available from BASF Coatings.
**CeramiClear5** coated panels available from PPG Industries.
**VW 2K** clearcoat coated panels available from BASF coatings.

The upper listed clear coats include acrylic resins and polyesters used alone or with mixtures of copolymers comprising hydroxy- or glycidyl-functionalities or carbamatic acid residues (groups); or copolymers of acrylic acid and methacrylic acid esters with hydroxyl groups, free acid groups and further comonomers (e.g. styrene). Panels are cut prior to 90 °peel and shear testing to the requested dimension.

Before testing, the Automotive clear coat coated panels are cleaned either with a 1:1 mixture of isopropylalcohol and distilled water in the case of Uregloss and VW 2K clear coats or with n-heptane for the CeramiClear 5 clear coat. Test panels are then rubbed dry with a paper tissue.

### Raw materials used:

**Isooctylacrylate** (C8-acrylate) is an ester of isooctylalcohol and acrylic acid which is obtained from the plant in Hilden (IOA Antwerp).

**2-Ethylhexylacrylate** (C8-acrylate) is an ester of 2-ethylalcohol and acrylic acid which is obtained from BASF AG, Germany. Tg-value: - 58 °C.

**2-Propylheptylacrylate** (2-PHA; C10-acrylate; for comparative films) is an ester of 2-propylheptanol and acrylic acid which is obtained from BASF AG, Germany. Tg-value: - 68 °C. 2-Propylheptylacrylate is a mixture of 2 isomers with a constant distribution. 2-Propylheptylacrylate: appr. 90 %; 2-propenoic acid, 4-methyl-2-propylhexylester: appr. 10 %, Purity over 99 %; boiling point: 160 °C, density: 0,84 g/cm3, viscosity: 2 mPas. 2-PHA is used for comparative measurements as it has an iso number of less than 2.

**C17-acrylate** (C 17 A, for inventive PSA films) is an ester of highly branched alkyl chain synthetic C17-alcohol and acrylic acid which is obtained from BASF AG, Germany. Freezing point < -100°C (similar linear product: Stearylacrylate (C16/18); freezing point = 16 °C. Purity over 98 %. The iso index of C17 A is 3.12

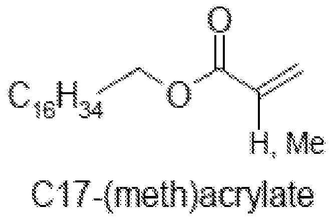

**Acrylic acid** (AA) from 3M Hilden, Germany.

**N-Vinylcaprolactam** (BASF AG, Germany) is a monofunctional acrylic monomer with an amide-group in the side-chain.

**1,6-Hexanedioldiacrylate** is a fast curing diacrylate and is obtained from 3M Hilden, Germany.

**Omnirad BDK** (iGm resins, Waalwijk Netherlands): 2,2-dimethoxy-2-phenylacetophenone (UV-initiator).

**Eurocell EC 300-h (**Europerl, Germany) is an aluminum silicate (also known as perlite). Available with different particle sizes and surface modifications, used here: EC 300-h: Ø particle size: 75 µm, hydrophobized with silanes.

**Aerosil 972** (Evonik, Germany) hydrophobic fumed silica particles

**3M Glassbubbles** (K15) are hollow glassbubbles with a diameter of 115 µm.

**Regalite R-1125** is a low molecular weight, fully hydrogenated hydrocarbon resin, commercially available from Eastman Chemical BV, NL

### Preparation of the liquid precursor for the pressure sensitive adhesive layer (PSA skins):

The different pressure sensitive adhesive layers used for the examples are prepared by the method which is in detail described in WO 2011094385(A1) by initially pre-polymerizing the C17 acrylate and AA monomers in a vessel containing 0,04 ppH of Omnirad BDK as a photoinitiator and then exposing the mixture to ultraviolet radiation until a coatable syrup with a viscosity of about 11000 mPas (when measured with a Brookfield viscosimeter, T = 25 °C, spindle 4, 12 rpm) is obtained.

Before the UV-exposure the mixture is flushed 10 minutes with nitrogen and nitrogen is also bubbled to the mixture until the polymerization process is stopped by adding air to the syrup. All the time the mixture is stirred with a propeller stirrer (300U/min) and the reaction is stopped when a viscosity of about 11000 mPas is reached. Additional comonomer(s), Omnirad BDK, tackifier and HDDA crosslinker are added to the syrup and mixed until they have dissolved. The skin syrup is then coated with a lab coater as described in WO 2011094385(A1) on the bottom to the filled core with a thickness of approx. 70-90 µm. The dual layer construction is coated on 75 µm solvent free siliconized PET-liners (SLVK-Liner having a dimension of 300mm x 300 mm).

The basic first pressure sensitive adhesive layers(skin formulations) used for the examples have the following compositions:
Low Tg acrylate (IOA, 2-PHA, C 17A) : 67.5 wt%
High Tg acrylate (AA) : 0.5 wt%
Further Comonomer (NVC) : 32 wt%
Crosslinker (HDDA) : 0.1 pph
Photoinitiator (Omnirad) : 0.2 pph

### Preparation of the liquid precursor for the opposing layer (foam layer):

### Liquid Precursor Foam (LPF):

The liquid precursor of the foam, later referred to as LPF, is prepared by combining the 90wt% of 2-EHA and 10 wt. % of acrylic acid with 0.04 pph of Omnirad as a photoinitiator in a glass vessel. Before the UV exposure is initiated the mixture is flushed 10 minutes with nitrogen and nitrogen is also bubbled into the mixture the whole time until the polymerization process is stopped by adding air to the syrup. All the time the mixture was stirred with a propeller stirrer (300 U/min) and the reaction is stopped when a viscosity of about 2000 mPas is reached (when measured with a Brookfield viscosimeter, T = 25 °C, spindle 4, 12 rpm). Additional 0.16 ppH Omnirad BDK, 0.12 ppH HDDA crosslinker, 6 ppH glass bubbles K15 and 6 pph Eurocell 300-h are added to the syrup and mixed until they have dissolved / dispersed.

The liquid precursor formulations are superimposed on one another as described in detail in WO 2011094385(A1) in a lab coater. The knife height setting is 130-140 µm for the first knife (for the first pressure sensitive adhesive layer) and 1240-1250 µm for the second knife (for the opposing layer (foam)), both levels calculated from the substrate surface.

The lab coater is connected to a UV curing station of 3 m length, where zones of different UV-intensities can be realized. The UV-radiation cures the tape from both its top and bottom side. Hereby in all zones the intensity from top and bottom side is set at equal levels. The total radiation intensities (top + bottom) and the length of the different zones are listed in Table 1:

**Table 1: UV Intensity of the Lab coater curing station.**

| | Zone 1 Length (200 cm) | Zone 2 (length 100 cm) |
|---|---|---|
| Total intensity [mW(cm2] | 2,07 | 4,27 |

### Example 1:

The 90°-peel measurements are tested on automotive clearcoats UreGloss, Cerami Clear5 and VW2K with a dwell time of 20 minutes and 72 hours @ 300 mm/min. Static shear measurements are tested with a dwell time of 24 h on UreGloss at 70 °C with 500 g hanging weights and on VW2K at 90 °C with 500 g hanging weights. The results are shown in the following tables 1 and 2. All dual layer PSA films are produced using the method as described in WO 2011094385(A1) with an overall thickness of 1200 µm.

In the first pressure sensitive adhesive layer (skin) the following parameters are diversified:
Low Tg acrylate (IOA, 2-PHA, C 17A)
50/50 mixtures of low Tg acrylates (IOA/C 17A)
Tackifier concentration (0 - 30 pph)

The opposing layer always has the same formulation for all examples:
Low Tg acrylate 2-EHA : 90 wt%
High Tg acrylate AA : 10 wt%
Croslinker (HDDA) : 0.1pph
Photoinitiator ( Omnirad) : 0.2 pph
Eurocell 300-h : 6 pph
Glassbubbles K15 : 6 pph

The following table 2 shows the 90°-peel values of the multilayer PSA films after a dwell time of 20 min, the multilayered PSA films being either non-tackified or tackified (with Regalite P-1125) in their first pressure sensitive adhesive layer (skin) formulations and using different low Tg acrylates. The opposing layer of the multilayer PSA films is filled with Eurocell 300-h/ glassbubbles K15 .

**Table 2: 90°-peel values after dwell time of 20 min.**

| | IOA | | C17 acrylate | | | | 50/50 IOA/ C17A | |
|---|---|---|---|---|---|---|---|---|
| Tackifier | 0 | 10 pph | 0 | 10 pph | 20 pph | 30 pph | 10pph | 20 pph |
| UreGloss | 15,30 | 17,78 | 22,14 | 17,63 | 17,43 | 11,86 | 19,17 | 17,48 |
| CC5 | 21,78 | 25,66 | 44,48 | 43,25 | 26,2 | 16,44 | 28,35 | 26,47 |
| VW2K | 23,61 | 30,94 | 34,96 | 27,38 | 23,75 | 15,64 | 27,54 | 26,92 |

These results show that after a dwell time of 20 min. the first pressure sensitive layer (skin) containing the C17 acrylate shows very high peel adhesion, even without the addition of a tackifier (with Regalite P-1125). Especially on CeramiClear 5 clear coat the values show very high peel performance.

The following table 3 shows the results after dwell time of 72 h

**Table 3: 90°-peel values after dwell time of 72h**

| | IOA | | C17 acrylate | | | | 50/50 IOA/ C17A | |
|---|---|---|---|---|---|---|---|---|
| Tackifier | 0 | 10 pph | 0 | 10 pph | 20 pph | 30 pph | 10pph | 20 pph |
| | | | | | | | | |
| UreGloss | 17,77 | 22,57 | 24,18 | 22,20 | 25,34 | 19,94 | 23,49 | 21,90 |
| CC5 | 23,46 | 30,74 | 43,84 | 45,26 | 43,14 | 34,14 | 41,01 | 46,79 |
| VW2K | 25,27 | 33,44 | 46,14 | 46,64 | 30,26 | 21,43 | 31,56 | 31,40 |

The results of the static shear values after a dwell time of 24 hours give for all films a time of over 10000+ min.

Table 3 reveals that for a first pressure sensitive layer comprising IOA, the addition of a tackifier improves the adhesive properties on all three clear coat surfaces. Looking at the low Tg C17-acrylate it can be observed that in the non-tackified version an even better performance are achieved when compared to IOA. By using a tackifier peel values will be turn out similiar on Cerami Clear5 and UreGloss but with the tendency to create shocky peel behavior, i.e. an uneven pulsating adhesive break. On VW2K clear coat substrates peel values drop when 20 pph of tackifier are used in the first pressure sensitive adhesive layer. If a tackified mixture of IOA and C17A is used in the first pressure sensitive layer peel values, especially on UreGloss, move from shocky to smooth peel.

### Example 2:

In the following table 4, the results of dual layer PSA films are shown having different low Tg monomers in the first pressure sensitive adhesive layer and without using any tackifiers. In table 5, the same PSA film constructions are displayed with additional 10 pph of Regalite R-1125 in the first pressure sensitive adhesive layer.

**Table 4: 90°-peel values after a dwell time of 72 hours of the multilayer PSA films having different low Tg monomers (IOA, 2-PHA, C17) in the first pressure sensitive adhesive layer.**

| | | | |
|---|---|---|---|
| 90°-Peel [dwell: 72h] | IOA | 2-PHA | C17 A |
| UreGloss | 17,77 | 22,46 | 24,18 |
| CC5.1 | 23,46 | 31,46 | 45 |
| VW2K | 25,27 | 36,14 | 46,14 |
| Static shear on Uregloss [500 g at 70°C] | 10000+ | 10000+ | 10000+ |
| Static shear on VW2K [500 g at | 10000+ | 10000+ | 10000+ |
| 90°C) | | | |

**Table 5: 90°-peel values after a dwell time of 72 hours of multilayer PSA films having different low Tg monomers (IOA, 2-PHA, C17) in the first pressure sensitive layer and additional10 pph of tackifier Regalite R-1125.**

| | | | |
|---|---|---|---|
| 90°-Peel [dwell: 72h] | IOA | 2-PHA | C17A |
| UreGloss | 22,57 | 24,79 | 18,41* |
| CC5.1 | 30,74 | 37,8 | 45,5 |
| VW2K | 33,44 | 43,88 | 46,64 |
| Static shear on Uregloss [500 g at 70°C] | 10000+ | 10000+ | 10000+ |
| Static shear on VW2K [500 g at 90°C) | 10000+ | 10000+ | 10000+ |

This comparison demonstrates that the low Tg monomer C17A in the first pressure sensitive layer has a high impact on the final performance of the adhesive strength of the multilayer PSA film. In comparison to 2-PHA, having an iso number of less than 2, the C 17 acrylate formulation shows an even higher peel performance. The C17A formulations even allow for tackifier free formulations of the first pressure sensitive adhesive layer, these reach similar peel performance on LSE substrates as tackified systems.

## Claims

1. A multilayer pressure sensitive adhesive (PSA) film, having a first pressure sensitive adhesive layer and at least one opposing layer, **characterized in that** the first pressure sensitive adhesive layer comprises a pressure-sensitive adhesive composition with a (meth)acrylic-based elastomeric material comprising a reaction product of polymerizable material comprising:
(a) a first monomer which is an alkyl (meth)acrylate ester of a primary alcohol R¹-OH, the alkyl (meth)acrylate ester being of Formula (I)
CH₂=C(R²)-(CO)-OR¹ (I)
wherein
R¹ is an alkyl having 14 to 25 carbon atoms and the primary alcohol R¹-OH has an iso number equal to at least 2 but no greater than 4,
R² is hydrogen or methyl; and
(b) a second monomer having an ethylenically unsaturated group.

2. The multilayer PSA film of claim 1, **characterized in that** the first monomer comprises a plurality of different alkyl (meth)acrylate esters of Formula (I).

3. The multilayer PSA film of claim 1 or 2, **characterized in that** the first monomer comprises a plurality of structural isomers of Formula (I).

4. The multilayer PSA film according to any of the preceding claims, **characterized in that** each R¹ has from 17 to 21 carbon atoms.

5. The multilayer PSA film according to any of the preceding claims, **characterized in that** each R¹ has 17 carbon atoms.

6. The multilayer PSA film according to any of the preceding claims, **characterized in that** the second monomer is selected from the group consisting of non-polar (meth)acrylate esters that are not of Formula (I), non-polar vinyl monomers without a (meth)acryloyl group, polar monomers, crosslinkers, and any combinations or mixtures thereof.

7. The multilayer PSA film according to claim 6, **characterized in that** the polar monomer comprises an acidic group, a hydroxyl group, or a nitrogen-containing group, wherein the acidic group is preferably a carboxyl group or a salt thereof.

8. The multilayer PSA film according to any of the preceding claims, **characterized in that** the second monomer comprises a strongly polar acrylate, which is preferably selected from the group consisting of acrylic acids, methacrylic acids, itaconic acids, hydroxyalkyl acrylates, acrylamides and substituted acrylamides, and any combinations or mixtures thereof.

9. The multilayer PSA film according to any of the preceding claims, **characterized in that** the polymerizable material comprises from 50 to 99.5 weight percent of the alkyl (meth)acrylate ester of Formula (I) and from 0.5 to 50 weight percent of the second monomer based on a total weight of polymerizable material.

10. The multilayer PSA film according to any of the preceding claims, **characterized in that** the polymerizable material comprises at least 50 weight percent of the alkyl (meth)acrylate ester of Formula (I) and up to 15 weight percent of a polar monomer based on a total weight of polymerizable material.

11. The multilayer PSA film according to any of the preceding claims, **characterized in that** the polymerizable material comprises at least 1 weight percent of a non-polar monomer not of Formula (I).

12. The multilayer PSA film according to any of claims 8 to 11, **characterized in that** the polymerizable material comprises up to 10 weight percent, preferably from 1 to 8 weight percent, more preferably from 2 to 6 weight percent of the strongly polar acrylate based on a total weight of polymerizable material.

13. The multilayer PSA film according to any of the preceding claims, **characterized in that** the polymerizable material comprises up to 5 weight percent of a crosslinker.

14. The multilayer PSA film according to any of the preceding claims, **characterized in that** the first pressure-sensitive adhesive layer further comprises a tackifier, preferably from 3 to 50 parts of tackifier per 100 parts of (meth)acrylic-based elastomeric material, more preferably from 5 to 30 parts of tackifier per 100 parts of (meth)acrylic-based elastomeric material.

15. The multilayer PSA film according to claim 14, **characterized in that** the tackifier is selected from the group consisting of C5-based hydrocarbon resins, C9-based hydrocarbon resins, C5/C9-based hydrocarbon resins, and any combinations or mixtures thereof.

16. The multilayer PSA film according to claim 14, **characterized in that** the tackifier is selected from the group consisting of hydrogenated terpene resins, hydrogenated rosin resins, hydrogenated C5-based hydrocarbon resins, hydrogenated C9-based hydrocarbon resins, hydrogenated C5/C9-based hydrocarbon resins, and any combinations or mixtures thereof.

17. The multilayer PSA film according to any of the preceding claims, **characterized in that** the opposing layer is a second pressure sensitive adhesive layer.

18. The multilayer PSA film according to claim 17, **characterized in that** the multilayer film comprises at least one intermediate layer between the first pressure sensitive adhesive layer and the second pressure sensitive adhesive layer.

19. The multilayer PSA film according to any of the preceding claims, **characterized in that** the opposing layer and/ or the intermediate layer comprise a polymer base material chosen from the group consisting of polyacrylates, polyurethanes, polyolefins, polystyrene, natural rubbers, synthetic rubbers, polyvinylpyrrolidone, and any combinations or mixtures thereof.

20. The multilayer PSA film according to any of the preceding claims, **characterized in that** the polymerizable precursor of the polymer base material for forming the opposing layer, comprises 2-octyl(meth)acrylate, wherein said polymerizable precursor preferably comprises from 85 to 99.5 wt%, more preferably from 90 to 99.5 wt% of 2-octyl(meth)acrylate.

21. The multilayer PSA film according to any of the preceding claims, **characterized in that** the polymerizable material and/or the polymerizable precursor of the polymer base material for forming the opposing layer and/ or the intermediate layer is at least partly derived from biological material, preferably from a plant material, wherein at least 25 wt.-%, preferably at least 40 wt.-% of said polymerizable material and/or said polymerizable precursor of the polymer base material for forming the opposing layer and/ or the intermediate layer are preferably derived from biological material.

22. The multilayer PSA film according to any of claim 20 or 21, **characterized in that** the 2-octyl(meth)acrylate is integrally derived from biological material.

23. The multilayer PSA film according to any of the preceding claims, **characterized in that** the first pressure sensitive adhesive layer, the opposing layer and/ or the intermediate layer comprise at least one filler material which is preferably selected from the group consisting of filler particles, microspheres, expendable microspheres, preferably pentane filled expendable microspheres or gaseous cavities, glassbeads, glass microspheres, hydrophobic silica type fillers, hydrophilic silica type fillers, fibers, electrically and/or thermally conducting particles, nano particles, and any combinations thereof; and wherein the intermediate layer preferably comprises an aluminium silicate, more preferably expanded perlite.

24. The multilayer PSA film according to claim 23, **characterized in that** the expanded perlite expanded perlite particles exhibit a surface modification, which is preferably chosen from hydrophobic surface modifications and/or a hydrophilic modification.

25. The multilayer PSA film according to any of the preceding claims, **characterized in that** the PSA film is provided on at least one of its major surfaces with a release liner.

26. A method for manufacturing a multilayer pressure sensitive adhesive film according to any of claims 1 to 25, whereby the first pressure sensitive adhesive layer and the opposing layer are superimposed on one another.

27. The method according to claim 26, **characterized in that** the first pressure sensitive adhesive layer and the opposing layer are prepared separately and subsequently laminated to each other.

28. The method according to claim 26, **characterized in that** a liquid precursor of the first pressure sensitive adhesive layer and a liquid precursor of the opposing layer are superimposed and then cured, preferably with actinic radiation or by thermal curing.

29. Use of a multilayer pressure sensitive adhesive film according to any of claims 1 to 25 as a PSA film to be bonded with its first pressure sensitive adhesive layer to a LSE substrate surface, preferably to a clear coat surface.
